# EUROPEAN PATENT APPLICATION

(11) **EP 4 524 734 A1**
(43) Date of publication of application: **19.03.2025**
(21) Application number: 23910168.6
(22) Date of filing: 14.12.2023
(51) Int. Cl.: G06F 9/451, G06F 3/0481

(54) **PAGE DISPLAY METHOD AND APPARATUS, DEVICE, COMPUTER-READABLE STORAGE MEDIUM AND PRODUCT**

(30) Priority: 29.12.2022 CN 202211716571
(71) Applicant: Beijing Zitiao Network Technology Co., Ltd., Beijing 100190 (CN)
(72) Inventor: LIU, Yang, Beijing 100028 (CN); ZHAO, Yuxuan, Beijing 100028 (CN)
(74) Representative: Grünecker Patent- und Rechtsanwälte PartG mbB
(86) International application number: PCT/CN2023/138704
(87) International publication number: WO 2024/140238

(57) **Abstract**

The embodiment of the disclosure provides a method, an apparatus, a device, a computer-readable storage medium for displaying a page. The method includes: in response to a predetermined trigger operation in a target application, displaying an information presenting page, the information presenting page comprising identification information of a plurality of second users having a predetermined association with a first user, and the target application comprising an instant messaging application installed in a personal computer; in response to a selection operation for the identification information of a target second user, displaying at least one media content historically posted by the target second user in the information presenting page.

## Description

This application claims the priority to Chinese Patent Application No. 202211716571.6, filed on December 29, 2022, and entitled "METHOD, APPARATUS, DEVICE AND COMPUTER READABLE STORAGE MEDIUM AND PRODUCT FOR DISPLAYING A PAGE", the entirety of which is incorporated herein by reference.

### FIELD

The embodiment of the disclosure relates to the technical field of interface interaction, in particular to a method, an apparatus, a device, a computer readable storage medium and a product for displaying a page.

### BACKGROUND

**In** order to facilitate user usage, many applications currently provide a version applied at a handheld device and a version applied at a personal computer. However, the application software applied at the personal computer tends to display less content in the displaying page, compared to the version applied at a handheld device.

### SUMMARY

The embodiment of the disclosure provides a method, an apparatus, a device, a computer readable storage medium and a product for displaying a page, for solving the technical problem that the content displayed by an existing method for displaying a page is less and the interaction mode is single.

**In** a first aspect, an embodiment of the present disclosure provides a method for displaying a page, comprising:
in response to a predetermined trigger operation in a target application, displaying an information presenting page, the information presenting page comprising identification information of a plurality of second users having a predetermined association with a first user, and the target application comprising an instant messaging application installed in a personal computer;
in response to a selection operation for the identification information of a target second user, displaying at least one media content historically posted by the target second user in the information presenting page.

In a second aspect, an embodiment of the present disclosure provides an apparatus for displaying a page, comprising:
a display module configured to, in response to a predetermined trigger operation in a target application, display an information presenting page, the information presenting page comprising identification information of a plurality of second users having a predetermined association with a first user, and the target application comprising an instant messaging application installed in a personal computer;
a processing module configured to, in response to a selection operation for the identification information of a target second user, display at least one media content historically posted by the target second user in the information presenting page.

In a third aspect, an embodiment of the present disclosure provides an electronic device comprising: a processor and a memory;
the memory storing computer executable instructions;
the processor executing the computer executable instruction stored in the memory, to cause the processor to be configured with a method of displaying a page according to any of claims 1 to 15.

In a fourth aspect, an embodiment of the present disclosure provides a computer-readable storage medium storing computer-executable instructions which, when executed by a processor, implement a method of displaying a page according to the above first aspect and various possible designs thereof.

In a fifth aspect, an embodiment of the present disclosure provides a computer program product comprising a computer program that, when executed by a processor, is configured with a method of displaying a page according to the above first aspect and various possible designs thereof.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also conceive of other drawings according to these drawings without creative labor.
FIG. 1 is a schematic flowchart of a method of displaying a page according to an embodiment of the present disclosure;
FIG. 2 is a schematic diagram of interface interaction according to an embodiment of the present disclosure;
FIG. 3 is a schematic flowchart of a method of displaying a page according to another embodiment of the present disclosure;
FIG. 4 is a schematic diagram of a display page according to an embodiment of the present disclosure;
FIG. 5 is a schematic diagram of still another display interface according to an embodiment of the present disclosure;
FIG. 6 is a schematic flowchart of a method of displaying a page according to still another embodiment of the present disclosure;
FIG. 7 is a schematic diagram of still another interface interaction according to an embodiment of the present disclosure;
FIG. 8 is a schematic flowchart of a method of displaying a page according to still another embodiment of the present disclosure;
FIG. 9 is a schematic flowchart of a method of displaying a page according to still another embodiment of the present disclosure;
FIG. 10 is a schematic flowchart of a method of displaying a page according to still another embodiment of the present disclosure;
FIG. 11 is a schematic diagram of still another display page according to an embodiment of the present disclosure;
FIG. 12 is a schematic structural diagram of an apparatus for displaying a page according to an embodiment of the present disclosure;
FIG. 13 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. Obviously, the described embodiments are a part of the disclosed embodiments, not all of them. Based on the embodiments disclosed in this disclosure, all other embodiments obtained by ordinary skilled persons in this field without creative labor are within the scope of protection of this disclosure.

The disclosure provides a method, an apparatus, a device, a computer readable storage medium and a product for displaying a page.

It should be noted that the method, apparatus, device, computer readable storage medium and product for displaying a page provided by the present disclosure may be applied to any scenario of page display.

In the existing application software installed on a personal computer, the displayed content is often relatively simple. For example, an instant messaging software installed on a personal computer usually only displays a user list, displays account description information of a target user based on the target user selected by the user, and the like. Therefore, the user cannot obtain more information based on the current page to perform more diversified interaction operations.

In order to enrich the page display content of the application software on the personal computer and enrich the interaction mode based on the display content, identification information of a plurality of second users having a predetermined association with the first user, may be displayed in the information presenting page, and in response to a selection of the first user, at least one media content historically posted by the target second user selected by the first user may be displayed. Therefore, the first user can quickly view more content through a simple trigger operation.

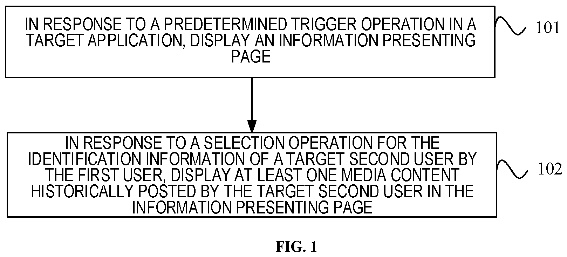

FIG. 1 is a schematic flowchart of a method of displaying a page according to an embodiment of the present disclosure.

Step 101: in response to a predetermined trigger in a target application, displaying an information presenting page, the information presenting page comprising identification information of a plurality of second users having a predetermined association with a first user, and the target application comprising an instant messaging application installed in a personal computer.

Step 102: in response to a selection by the first user for the identification information of a target second user, displaying at least one media content historically posted by the target second user in the information presenting page.

The executing body of this embodiment is an apparatus for displaying a page, which may be disposed in a personal computer. Therefore, the page may be displayed based on the corresponding operation triggered by the first user in the personal computer through human-computer interaction.

In this embodiment, the personal computer may be provided with a target application. The target application comprises an instant messaging application installed in a personal computer. Alternatively, the target application may also comprise any application capable of providing an instant messaging function installed in a personal computer.

The first user may trigger a predetermined trigger operation in the target application. In response to the predetermined operation, an information presenting page may be displayed, where the information presenting page comprises identification information of a plurality of second users having a predetermined association with a first user. The second user having the predetermined association with the first user may be a user that the first user follows, a user that follows each other with the first user, or a user that the first user searches for based on predetermined search content or the like, which is not limited in the present disclosure.

It should be noted that the trigger operation comprises at least one of: a trigger on a predetermined control, a trigger on a first target key corresponding to a predetermined target keyboard, and a trigger on a second target key corresponding to a predetermined target mouse.

The target keyboard and the target mouse are communicatively connected to a current electronic device.

Taking the current electronic device as a personal computer, for example, the personal computer may be provided with an interactive display screen. Through the display screen, the first user may trigger the predetermined control to display the page. The personal computer may also be in communication connection with the target keyboard and the target mouse, so that the first user may trigger the first target key corresponding to the target keyboard and trigger the second target key corresponding to the predetermined target mouse, to cause the page to be displayed. In practical applications, the trigger operation may be implemented in any one or more of the above trigger manners, which is not limited in the present disclosure.

Further, after the information presenting page is displayed, the first user may perform a selection operation of the second user according to the actual requirement. In response to the selection operation triggered by the first user, the target second user selected by the first user may be determined, and at least one media content historically posted by the target second user may be displayed in the information presenting page. It may be understood that the at least one media content historically posted by the target second user may be media content posted by the target second user in the current application, or may be media content posted by the target second user in a predetermined application associated with the current application.

Different from the existing display mode that only displays the personal information of the second user, the presented content of the information presenting page may be enriched by displaying at least one media content historically posted by the target second user, so that the first user can perform more diversified interaction operations based on the presented content.

Optionally, the information presenting page may display identification information corresponding to at least one group chat. In response to the trigger of the first user for the identification information of any group chat, the identification information of the group chat is determined as the current target second user. Since the group chat may comprise a plurality of participants, a predetermined quantity of media content historically posted by the plurality of participants may be displayed in the information presenting page based on a trigger performed by the first user on the identification information of the group chat. For example, when the number of participants in the group chat is large, one media content historically posted by each participant may be displayed in the information presenting page. Alternatively, still for example, when the number of participants in the group chat is small, at least one media content historically posted by each participant may be displayed in the information presenting page.

Optionally, in response to the selection operation triggered by the first user, the personal information of the target second user and the interaction control for interacting with the target second user may be presented in the information presenting page. The interaction control may comprise, but is not limited to, a chat control, an add control, and the like.

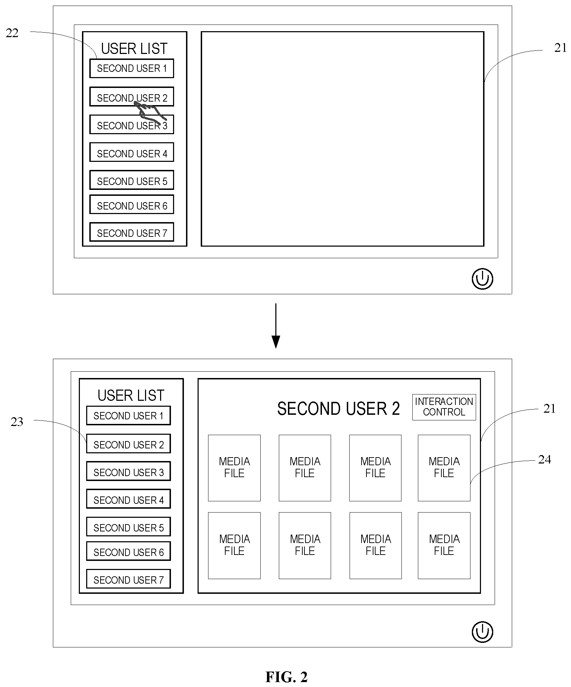

FIG. 2 is a schematic diagram of interface interaction according to an embodiment of the present disclosure. As shown in FIG. 2, the information presenting page 21 may display identification information 22 of a plurality of second users, where the second users have the predetermined association with a first user. In response to a selection of the first user in the information presenting page 21, a target second user 23 selected by the first user is determined. At least one media content 24 historically posted by the target second user 23 is displayed within the information presenting page 21.

According to the method of displaying a page provided by the embodiment, the information presenting page is displayed in response to the predetermined trigger of the user in the target application installed in the personal computer, and at least one media content historically posted by the target second user is displayed based on the selection of the user in the information presenting page. In such a way, the presented content in the information presenting page can be enriched, and then the interaction in the information presenting page can be enriched. Therefore, the user can obtain more information in the information presenting page.

Optionally, based on any of the foregoing embodiments, the identification information of the second users is displayed in a first area of the information presenting page, the step 102 comprises:
displaying the at least one media content historically posted by the target second user in a second area of the information presenting page.

In this embodiment, the information presenting page may comprise the first area and the second area, both of which may be displayed in parallel. The first area may be displayed on the left side of the information presenting page, and the second area may be displayed on the right side of the information presenting page in parallel. Alternatively, the first area may be displayed on the upper side of the information presenting page, and the second area may be displayed on the lower side of the information presenting page. Optionally, the display size of the first area may be greater than the display size of the second area. The first user may adjust the display positions and display sizes of the first area and the second area according to actual requirements, which is not limited in the present disclosure.

Further, the identification information of a plurality of second users having a predetermined association with a first user may be displayed in the first area in the information presenting page, and based on a selection of the first user for the identification information of the second users, at least one media content historically posted by the target second user may be displayed in second area.

According to the method of displaying a page provided in this embodiment, the information presenting page is divided into a first area and a second area, so that a user list can be displayed in the first area, and at least one media content historically posted by the target second user can be displayed in the second area. More display content can be displayed in the information presenting page, so that the first user can view more content in the information presenting page.

Optionally, based on any of the foregoing embodiments, step 101 comprises:
displaying the information presenting page in response to a trigger of user on a predetermined user list control;
or, displaying the information presenting page in response to the predetermined trigger of the first user in the target application comprising:
   obtaining a search content inputted by the first user based on a predetermined search control, and determining at least one second user matching the search content.
   displaying the information presenting page, the identification information of the at least one second user being presented in the information presenting page.

In this embodiment, a plurality of different functions may be comprised in the target application, and controls according to different functions, such as a user list control, a friend control, and a personal central control, may be displayed on the lower side of the display interface. In response to the trigger of the first user on the user list control, the information presenting page may be displayed, and the identification information of the plurality of second users having the predetermined association with the first user may be displayed in the information presenting page. The predetermined association may be: the second user is the followed user of the first user, the second user is a friend of the first user followed each other, and the like.

Alternatively, the first user may search the second user based on the related information of the second user. The target application may comprise a predetermined search control. In response to the trigger of the first user on the search control, the search content inputted by the first user based on a predetermined search control may be obtained, where the search content may comprise identification information of the second user. At least one second user matching the search content is searched for based on the search content. The information presenting page is displayed, and the identification information of the at least one second user is presented in the information presenting page. The predetermined association may be: the second user is a user determined based on the search content inputted by the first user.

According to the method of displaying a page provided in this embodiment, the information presenting page is displayed based on the trigger of the first user on the user list control or the search triggered by the first user, so that the first user can view more content of the second user in the information presenting page, and then can perform more diversified interaction operations based on the display content in the information presenting page.

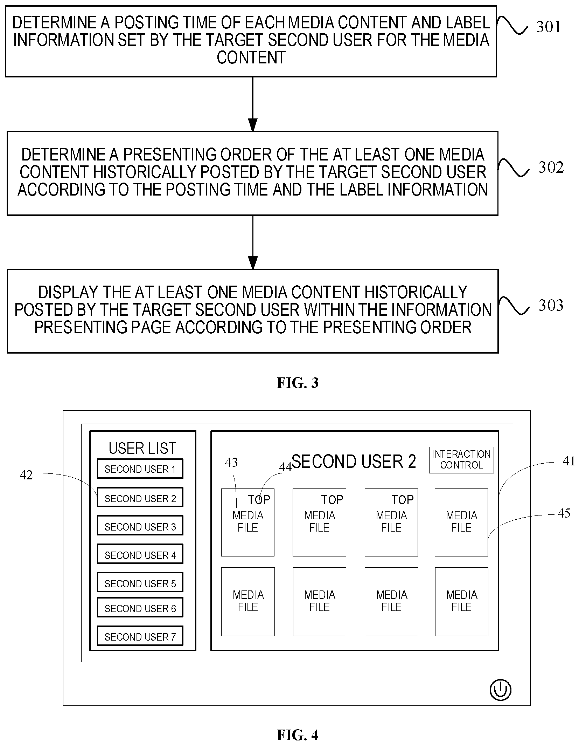

FIG. 3 is a schematic flowchart of a method of displaying a page according to still another embodiment of the present disclosure. As shown in FIG. 3, the step 102 comprises:
Step 301: determining a posting time of each media content and label information set by the target second user for the media content.
Step 302: determining a presenting order of the at least one media content posted by the target second user according to the posting time and the label information.
Step 303: displaying the at least one media content historically posted by the target second user within the information presenting page according to the presenting order.

In this embodiment, after posting the media content, for each posted media content, the second user may set the label information for the media content according to actual requirements. The table information may comprise top label information. By setting the label information, the media content with the label information can be displayed on the top of the user homepage.

Therefore, in response to the selection by the first user for any target second user, the posting time of each media content historically posted by the second user and the label information set by the target second user for the media content may be determined. A presenting order of the at least one media content historically posted by the target second user is determined according to the posting time and the label information.

As an implementable manner, in a process of determining a presenting order, media content with the label information may be preferentially displayed, and media content without label information may be displayed in a chronological order according to a posting time. When there are multiple media contents with label information, the plurality of media contents with label information may be preferentially displayed in a chronological order of the posting time.

Further, after determining the presenting order corresponding to the at least one media content, the at least one media content historically posted by the target second user may be displayed in the information presenting page according to the presenting order.

FIG. 4 is a schematic diagram of a display page according to an embodiment of the present disclosure. As shown in Figure 4, the identification information 42 of a plurality of second users, as well as media content posted historically by the target second user selected by the first user, may be displayed on the information presenting page 41. The presenting order of the at least one media content may be determined based on the posting time and the label information. The top media content 43 set by the second user may be preferentially displayed, where the top media content set the table information 44 on the top, and the media content 45 without the top label information may be displayed according to the posting time.

According to the method for displaying a page provided in this embodiment, the presenting order of the at least one media content is determined based on the posting time and the label information corresponding to the media content historically posted by the second user, and the media content is presented according to the presenting order, so that more high-quality content can be displayed in the information presenting page.

Optionally, based on any of the foregoing embodiments, step 102 comprises:
determining a current date, and displaying a target calendar matching with the current date in the information presenting page.
determining, for each media content, a posting time of the media content, and displaying, in the target calendar, according to the posting time, the media content at a position matching the posting time.

In this embodiment, in order to further enrich the presentation style of the media content, and make the first user more intuitively determine the posting date of the media content, the at least one media content may be displayed in the form of a calendar.

Optionally, the current date may be determined, and the target calendar matching the current date is displayed in the information presenting page. For example, if the current date is Dec. 25, 2022, the target calendar of December 2022 may be displayed in the information presenting page.

For each media content, a posting time of the media content is determined, a position matching the posting time is determined in the target calendar according to the posting time, and the media content is displayed at the position.

For example, if the posting time of a media content is Dec. 06, 2022, the media content may be displayed at a position of 06 in the target calendar of December 2022.

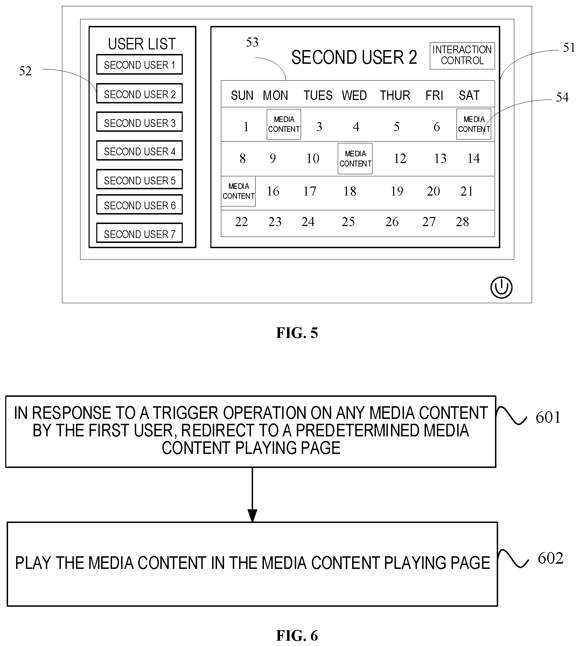

FIG. 5 is a schematic diagram of still another display interface according to an embodiment of the present disclosure. As shown in FIG. 5, identification information 52 of a plurality of second users and a target calendar 53 matching the current time may be displayed in the information presenting page 51. According to the posting time of the at least one media content 54 posted historically by the target second user selected by the first user, the media content may be displayed at a position matching the posting time.

According to the method for displaying a page provided by the embodiment, with the current date determined, the target calendar corresponding to the current date is displayed in the content display page, and the media content is displayed at the position matching the posting time in the target calendar, so that the display style of the media content can be enriched, and the display effect of the media content is optimized.

Optionally, on the basis of any of the foregoing embodiments, the information presenting page comprises at least one media content category. The step 102 comprises:
determining a media content category corresponding to each media content historically posted by the target second user.
displaying, for each media content, the media content in a display area associated with the media content category in the information presenting page.

In this embodiment, different media content posted by the second user may correspond to different media content categories. For example, the media content category may comprise pet, daily, people, food and the like. In order to enable the first user to more intuitively determine categories of different media content, at least one media content may be displayed according to the media content category.

Optionally, the media content category corresponding to each media content posted historically by the target second user may be determined. For each media content, the media content is displayed in a display area associated with the media content category within the information presenting page. For example, the media content may comprise four media content categories, each media content category corresponds to a corresponding display area, and media content corresponding to the media content category may be separately displayed in different display areas. Alternatively, still for example, the option of media content category may be displayed in the predetermined display area. In response to a selection of the first user on the option of the media content category, the media content corresponding to the media content category may be displayed in the information presenting page.

Further, on the basis of any of the above embodiments, after displaying the media content in the display area associated with the media content category in the information presenting page, the followings are further comprised:
in response to a selection of the first user for any media content category, presenting at least one media content corresponding to the media content category in the information presenting page.

In this embodiment, the first user may switch the currently displayed media content according to an actual requirement. Specifically, in response to the selection of the first user for any media content category, the target media content category selected by the first user may be determined. The at least one media content corresponding to the media content category is presented in an information presenting page. Therefore, the content displayed in the information presenting page can be meet the personalized requirement of the first user more closely.

According to the method for displaying a page provided by the embodiment, at least one media content is displayed according to the media content category, so that the display style of the media content can be further enriched. In addition, the media contents of the same media content type can be viewed in batch.

FIG. 6 is a schematic flowchart of a method for displaying a page according to still another embodiment of the present disclosure. Based on any of forgoing embodiment, as shown in FIG.6, after step 102, the followings are further comprised:
Step 601: redirecting to a predetermined media content playing page in response to a trigger of the first user on any media content.
Step 602: playing the media content in the media content playing page.

In this embodiment, the first user may view the media content presented in the information presenting page. The first user may trigger any media content according to an actual requirement, where the trigger comprises, but is not limited to an operation such as a single-click, a double-click, a drag, and the like. The trigger may be generated by a click of the first user on the display screen, or may be generated by the first user through triggering a mouse or a specific key in a keyboard in communication connection with the current device, which is not limited in the present disclosure.

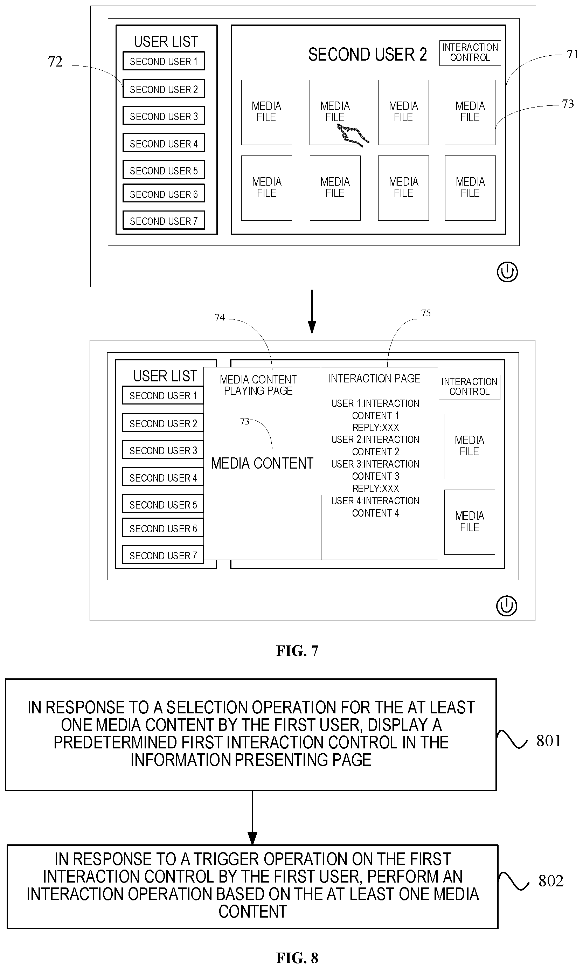

Further, in response to the trigger of the first user for any first media content, a predetermined media content playing page may be displayed, and media content selected by the first user is played in the media content playing page. Optionally, the media content playing page may be displayed on the upper layer of the information presenting page, and the display size of the media content playing page may be less than the display size of the information presenting page. Alternatively, in response to the trigger of the first user for any first media content, the media content playing page may redirected, wherein the display size of the media content playing page may be the same as the display size of the information presenting page, and any first media content selected by the first user is played within the media content playing page. FIG. 7 is a schematic diagram of another interface interaction according to an embodiment of the present disclosure. As shown in FIG. 7, identification information 72 of a plurality of second users and at least one media content 73 posted historically by a target second user selected by the first user may be displayed in the information presenting page 71. In response to the trigger of the first user for any media content 73, the media content playing page 74 may be redirected to, and the media content 73 may be played in the media content playing page 74. Optionally, an interaction page 75 associated with the media content 73 may also be displayed. The interaction page 75 comprises a plurality of interaction content, and the first user may interact for the media content 73 on the interaction page, for example, post a a comment, and the like.

Further, on the basis of any of the above embodiments, after step 602, the method further comprises:
in response to switching triggered by the first user, switching to play other media content historically posted by the target second user.

In this embodiment, at least one media content historically posted by the second user may be played in the media content playing page. In response to the switching triggered by the first user in the media content playing page, other media content historically posted by the target second user may be switched to be played.

Optionally, if the playing of at least one media content posted historically by the second user is currently completed, in response to the switching, the media content in the predetermined recommended content stream may continue to be played for the first user. Alternatively, in a possible implementation, if the playing of the at least one media content posted historically by the second user is currently completed, in response to the switching, predetermined prompt information may be displayed to prompt the first user that the playing of all the media content has been completed.

According to the method for displaying a page provided in this embodiment, in response to the trigger by the first user for any media content, the predetermined media content playing page is redirected to, and at least one media content historically posted by the second user is played within the media content playing page, thereby enabling batch viewing of the media contents posted by the second user, and simplifying the viewing procedure of the media content.

FIG. 8 is a schematic flowchart of a method for displaying a page according to still another embodiment of the present disclosure. On the basis of the any above embodiment, as shown in FIG. 8, after step 102, the followings are further comprised:
Step 801: displaying a predetermined first interaction control in the information presenting page in response to a selection of the first user for the at least one media content.
Step 802: performing an interaction based on the at least one media content in response to a trigger on the first interaction control.

In this embodiment, the first user may perform an interaction based on any media content, or may perform an interaction based on at least one media content in batches. The predetermined first interaction control is displayed in the information presenting page in response to a selection of the first user for the at least one media content. The first user may select the media content by performing a predetermined trigger on the media content, or may select the media content by triggering the predetermined selection control, which is not limited in the present disclosure.

Further, in response to the triggering of the first user on the first interaction control, the interaction may be performed based on the at least one media content selected by the first user. The interaction comprises, but is not limited to, a like operation, a favorite operation, a forwarding operation, and the like.

Further, on the basis of any of the foregoing embodiments, the first interaction control comprises a forwarding control. Step 802 comprises:
displaying a predetermined user list in response to a trigger of the first user on the forwarding control.
determining at least one target user selected by the first user in response to a selection of the first user in the user list.
sending the at least one media content to the at least one target user.

In this embodiment, the first interaction control comprises a forwarding control. The first user may share the at least one selected media content based on the forwarding control.

Optionally, in response to the trigger of the first user on the forwarding control, a predetermined user list may be displayed, where the user list comprises identification information of a user that has a predetermined association with the first user. At least one target user selected by the first user is determined in response to a selection of the first user in the user list. After the at least one target user is determined, the at least one media content selected by the first user may be forwarded to the at least one target user. Therefore, the forwarding of the batch of media contents can be quickly realized.

As a possible implementation, the current device may be communicatively connected to a predetermined target mouse and/or a target keyboard. In response to the trigger of the first user on the selected media content through the target mouse and/or the predetermined target key in the target keyboard, the sharing of the media content may be implemented. Optionally, in response to the trigger of the first user on the selected media content through the target mouse and/or the predetermined target key in the target keyboard, a predetermined function list may also be presented, and the function list may comprise a plurality of trigger that may be based on the media content. The first user may select a target function from the function list according to the actual requirement, and process the selected media content based on the target function.

Taking an actual application for example, the current device may be communicatively connected to the target mouse. The user list may be displayed in response to the trigger of the first user on the selected media content by the right key in the target mouse. The at least one target user selected by the first user is determined, and the media content is shared to at least one target user.

Still taking the actual application for example, the function list may be displayed, in response to a trigger of the first user in any display area by the right key in the target mouse. The function list comprises at least a multi-selection function control. In response to the trigger of the first user on the multi-selection function control, at least one media content in the information presenting page may be set to a selectable state for selection by the first user. After the at least one media content selected by the first user is determined, in response to the trigger of the first user on the predetermined sharing control in the information presenting page, a predetermined user list may be displayed, at least one target user selected by the first user is determined, and at least one media content selected by the first user is forwarded to the at least one target user.

Further, on the basis of any of the foregoing embodiments, the first interaction control comprises a like control or a favorite control. The step 802 comprises:
performing a like operation or a favorite operation on the at least one media content in response to a trigger of the first user on the like control or the favorite control.

In this embodiment, the first interaction control comprises a like control or a favorite control. In response to the trigger of the first user on the like control or favorite control, the like operation or favorite operation may be performed on the at least one media content in batches. Therefore, the first user needs not to perform the like operation or favorite operation on the media content one by one. The like operation or favorite operation on the batch of media contents can be quickly realized based on the first interaction control, and the interaction process is simplified.

According to the method for displaying a page provided by the embodiment, the predetermined first interaction control is displayed in the information presenting page based on the selection of the first user on the at least one media content, so that the interaction operation may be performed in batches on the media content based on the first interaction control, the interaction operation with the at least one media content can be quickly realized, and the interaction process is simplified.

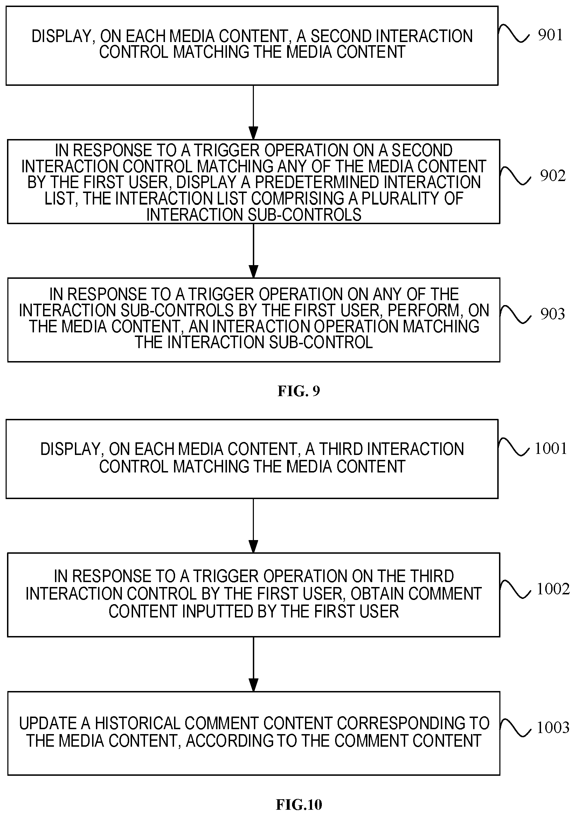

FIG. 9 is a schematic flowchart of a method for displaying a page according to still another embodiment of the present disclosure. Based on any of above embodiment, as shown in FIG. 9, after step 102, the followings are further comprised:
Step 901: displaying, on each media content, a second interaction control matching the media content.
Step 902: displaying a predetermined interaction list in response to a trigger of the first user on a second interaction control matching any of media content, the interaction list comprising a plurality of interaction sub-controls.
Step 903: in response to a trigger of the first user on any of the interaction sub-controls, performing, on the media content, an interaction operation matching the interaction sub-control.

In this embodiment, in order to facilitate the interaction with the media content, a second interaction control matching the media content may be displayed on each media content. When browsing the media content, the first user may trigger the second interaction control matching any of media content according to the actual requirement. In response to the trigger, a predetermined interaction list may be displayed, where the interaction list comprises a plurality of interaction sub-controls. For example, the interaction sub-control comprises, but is not limited to, a like sub-control, a favorite sub-control, a forwarding sub-control, a comment sub-control, and the like.

In response to the trigger of the first user on any interaction sub-control, an interaction operation matching the interaction sub-control may be performed on the media content based on the trigger. For example, if the first user triggers the favorite sub-control, the media content may be collected into the designated favorites folder. If the first user triggers the like sub-control, the number of like of the media content may be updated based on the trigger.

According to the method for displaying a page provided by the embodiment, the second interaction control matching the media content is displayed on each media content, so that various interaction operations with the media content can be realized based on the second interaction control, and the interaction efficiency is improved.

FIG. 10 is a schematic flowchart of a method for displaying a page according to still another embodiment of the present disclosure. On the basis of any above embodiment, as shown in FIG. 10, after step 102, the followings are further comprised:
Step 1001: displaying, on each media content, a third interaction control matching the media content.
Step 1002: obtaining comment content inputted by the first user in response to a trigger of the first user on the third interaction control.
Step 1003: updating a historical comment content corresponding to the media content, according to the comment content.

In this embodiment, in order to enable the first user to quickly comment on the media content of interest, a third interaction control matching the media content may be displayed on each media content. As a possible implementation, the third interaction control may be displayed in a form of an input box, or may be displayed in another display style, which is not limited in the present disclosure.

Further, in response to the trigger of the first user on the third interaction control, the comment content inputted by the first user based on the third interaction control may be obtained. A comment operation may be performed on the media content according to the comment content. In addition, the historical comment content corresponding to the media content may be updated according to the comment content.

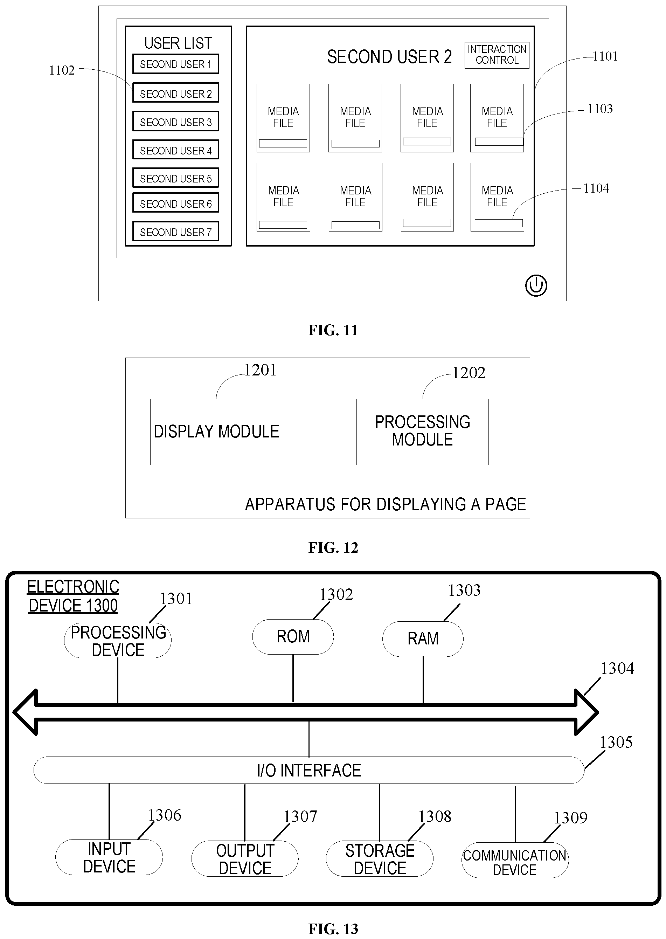

FIG. 11 is a schematic diagram of still another display page according to an embodiment of the present disclosure. As shown in FIG. 11, identification information 1102 of a plurality of second users and at least one media content 1103 posted historically by a target second user selected by the first user may be displayed in the information presenting page 1101. A third interaction control 1004 matching the media content may be displayed on each media content 1103. The user may input the comment content based on the third interaction control 1004, and comment on the media content 1103.

According to the method for displaying a page provided by the embodiment, the third interaction control matching the media content is displayed on each media content, so that the comment on the media content can be quickly realized based on the third interaction control, and the comment process is simplified.

FIG. 12 is a schematic structural diagram of an apparatus for displaying a page according to an embodiment of the present disclosure. As shown in FIG. 12, the apparatus comprises a display module 1201 and a processing module 1202. The display module 1201 is configured to display an information presenting page in response to a predetermined trigger of the first user in a target application, the information presenting page comprises identification information of a plurality of second users having a predetermined association with a first user, and the target application comprises an instant messaging application installed in a personal computer. The processing module 1202 is configured to display at least one media content historically posted by a target second user in the information presenting page, in response to a selection of the first user for the identification information of the target second user.

Further, on the basis of any of the above embodiments, the identification information of the second users is displayed in a first area of the information presenting page, and the processing module is configured to display the at least one media content historically posted by the target second user in a second area of the information presenting page.

Further, on the basis of any of the above embodiments, the display module is configured to display the information presenting page in response to a trigger of the user on a predetermined user list control. Alternatively, the display module is configured to obtain a search content inputted by the first user based on a predetermined search control, and determine at least one second user matching the search content. The information presenting page is displayed, and the identification information of the at least one second user is presented in the information presenting page.

Further, on the basis of any of the above embodiments, the processing module is configured to determine a posting time of each media content and label information set by the target second user for the media content. A presenting order of the at least one media content posted historically by the target second user is determined according to the posting time and the label information. The at least one media content historically posted by the target second user is displayed within the information presenting page according to the presenting order.

Further, on the basis of any of the above embodiments, the processing module is configured to determine a current date, and display a target calendar matching with the current date in the information presenting page. For each media content, a posting time of the media content is determined, and in the target calendar, according to the posting time, the media content is displayed at a position matching the posting time.

Further, on the basis of any of the above embodiments, the information presenting page comprises at least one media content category. The processing module is configured to determine a media content category corresponding to each media content historically posted by the target second user. For each media content, the media content is displayed in a display area associated with the media content category in the information presenting page.

Further, on the basis of any of the above embodiments, the apparatus further comprises a display module, which is configured to, in response to a selection of the first user for any media content category, present at least one media content corresponding to the media content category in the information presenting page.

Further, on the basis of any of the above embodiments, the apparatus further comprises a redirecting module, which is configured to redirect to a predetermined media content playing page in response to a trigger of the first user on any media content. The playing module is configured to play the media content in the media content playing page.

Further, on the basis of any of the above embodiments, the apparatus further comprises a switching module, which is configured to, in response to switching triggered by the first user, switching to play other media content historically posted by the target second user.

Further, on the basis of any of the above embodiments, the apparatus further comprises a display module, which is configured to display a predetermined first interaction control in the information presenting page in response to a selection of the first user for the at least one media content. An interaction module is configured to perform an interaction based on the at least one media content in response to a trigger of the first user on the first interaction control.

Further, on the basis of any of the above embodiments, the first interaction control comprises a forwarding control. The interaction module is configured to display a predetermined user list in response to a trigger of the first user on the forwarding control. At least one selected target user selected by the first user is determined in response to a selection of the first user in the user list. The at least one media content is sent to the at least one target user.

Further, on the basis of any of the above embodiments, the first interaction control comprises a like control or a favorite control. The interaction module is configured to perform a like operation or a favorite operation on the at least one media content in response to a trigger of the first user on the like control or the favorite control.

Further, on the basis of any of the above embodiments, the apparatus further comprises a display module, which is configured to display, on each media content, a second interaction control matching the media content. The processing module is configured to display a predetermined interaction list in response to a trigger of the first user on a second interaction control matching any of the media content, the interaction list comprises a plurality of interaction sub-controls. The interaction module is configured to, in response to a trigger of the first user on any of the interaction sub-controls, perform, on the media content, an interaction operation matching the interaction sub-control.

Further, on the basis of any of the above embodiments, the apparatus further comprises a display module, which is configured to display, on each media content, a third interaction control matching the media content. The obtaining module is configured to obtain comment content inputted by the first user in response to a trigger of the first user on the third interaction control. The updating module is configured to update a historical comment content corresponding to the media content, according to the comment content.

Further, on the basis of any of the above embodiments, the trigger comprises at least one of: a trigger on a predetermined control, a trigger on a first target key corresponding to a predetermined target keyboard, and a trigger on a second target key corresponding to a predetermined target mouse. The target keyboard and the target mouse are communicatively connected to a current electronic device.

The apparatus provided in this embodiment may be configured to perform the technical solutions in the foregoing method embodiments, and implementation principles and technical effects thereof are similar, and details are not described herein again in this embodiment.

In order to implement the foregoing embodiments, an embodiment of the present disclosure further provides an electronic device, comprising: a processor and a memory. The memory stores computer-executable instructions.

The processor executes the computer executable instruction stored in the memory, to cause the processor to execute the method for displaying a page according to any of the above embodiments.

The device provided in this embodiment may be configured to perform the technical solutions in the foregoing method embodiments, and implementation principles and technical effects thereof are similar, and details are not described herein again in this embodiment.

FIG. 13 is a schematic structural diagram of an electronic device according to an embodiment of the present disclosure. As shown in FIG. 13, the electronic device 1300 may be a terminal device or a server. The terminal device may comprise, but is not limited to, a mobile terminal such as a mobile phone, a notebook computer, a digital broadcast receiver, a personal digital assistant (PDA), a portable Android device (PAD), a portable media player (PMP), an on-board terminal (for example, an on-board navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 1300 may comprise a processing device (for example, a central processing unit, a graphics processor, etc.) 1301, which may perform various appropriate actions and processing according to a program stored in a read only memory (ROM) 1302 or a program loaded into a random access memory (RAM) 1303 from a storage device 1308. In the RAM 1303, various programs and data required by the operation of the electronic device 1300 are also stored. The processing device 1301, the ROM 1302, and the RAM 1303 are connected to each other through a bus 1304. Input/output (I/O) interface 1305 is also connected to bus 1304.

Generally, the following devices may be connected to the I/O interface 1305: an input device 1306 comprising, for example, a touch screen, a touch pad, a keyboard, a mouse, a camera, a microphone, an accelerometer, a gyroscope, etc.; an output device 1307 comprising, for example, a liquid crystal display (LCD), a speaker, a vibrator, etc.; a storage device 1308 comprising, for example, a magnetic tape, a hard disk, etc.; and a communication device 1309. The communication device 1309 may allow the electronic device 1300 to communicate wirelessly or wired with other devices to exchange data. While FIG. 13 shows an electronic device 1300 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure comprise a computer program product comprising a computer program embodied on a computer readable medium, the computer program comprising program code for performing the method shown in the flowchart. In such embodiments, the computer program may be downloaded and installed from the network through the communication device 1309, or installed from the storage device 1308, or from the ROM 1302. When the computer program is executed by the processing apparatus 1301, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may comprise, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may comprise a data signal propagated in baseband or as part of a carrier, where the computer readable program code is carried. Such propagated data signals may take a variety of forms comprising, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, comprising, but not limited to: wires, optical cables, RF (radio frequency), and the like, or any suitable combination of the foregoing.

An embodiment of the present disclosure further provides a computer-readable storage medium, where the computer-readable storage medium stores a computer-executable instruction, and when the processor executes the computer-executable instruction, the method for displaying a page according to any of the foregoing embodiments is implemented.

An embodiment of the present disclosure further provides a computer program product, comprising a computer program, where the computer program, when executed by a processor, implements the method for displaying a page according to any of the foregoing embodiments.

The computer-readable medium described above may be comprised in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, comprising object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, comprising a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that comprises one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "a unit for obtaining at least two Internet Protocol addresses".

The functions described above may be performed, at least in part, by one or more hardware logic components. For example, without limitation, example types of hardware logic components that may be used comprise: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may comprise, but is not limited to, electronic, magnetic, optical, electromagnetic, infrared, or semiconductor systems, devices, or devices, or any suitable combination of the foregoing. More specific examples of machine-readable storage media may comprise electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

In a first aspect, a method of displaying a page is provide according to one or more embodiments of this disclosure, comprising:
in response to a predetermined trigger operation of a first user in a target application, displaying an information presenting page, the information presenting page comprising identification information of a plurality of second users having a predetermined association with a first user, and the target application comprising an instant messaging application installed in a personal computer;
in response to a selection operation of the first user for the identification information of a target second user, displaying at least one media content historically posted by the target second user in the information presenting page.

According to one or more embodiments of this disclosure, in response to the predetermined trigger operation of the first user in the target application, displaying the information presenting page comprises:
in response to a trigger operation of the user on a predetermined user list control, displaying the information presenting page;
or, in response to the predetermined trigger operation of the first user in the target application, displaying the information presenting page comprising:
   obtaining a search content inputted by the first user based on a predetermined search control, and determining at least one second user of the second users matching the search content;
   displaying the information presenting page, the identification information of the at least one second user being presented in the information presenting page.

According to one or more embodiments of this disclosure, displaying the at least one media content historically posted by the target second user in the information presenting page comprises:
determining a posting time of each media content and label information set by the target second user for the media content;
determining a presenting order of the at least one media content historically posted by the target second user according to the posting time and the label information;
displaying the at least one media content historically posted by the target second user within the information presenting page according to the presenting order.

According to one or more embodiments of this disclosure, displaying the at least one media content historically posted by the target second user in the information presenting page comprises:
determining a current date, and displaying a target calendar matching with the current date in the information presenting page;
determining, for each media content, a posting time of the media content, and displaying, in the target calendar, according to the posting time, the media content at a position matching the posting time.

According to one or more embodiments of this disclosure, the information presenting page comprises at least one media content category; and displaying the at least one media content historically posted by the target second user in the information presenting page comprises:
determining a media content category corresponding to each media content historically posted by the target second user;
displaying, for each media content, the media content in a display area associated with the media content category in the information presenting page.

According to one or more embodiments of this disclosure, after displaying the media content in the display area associated with the media content category in the information presenting page, the following are further comprised:
in response to a selection operation of the first user for any media content category, presenting at least one media content corresponding to the media content category in the information presenting page.

According to one or more embodiments of this disclosure, after displaying the at least one media content historically posted by the target second user in the information presenting page, the following are further comprised:
in response to a trigger operation of the first user on any media content, redirecting to a predetermined media content playing page;
playing the media content in the media content playing page.

According to one or more embodiments of this disclosure, after playing the media content in the media content playing page, the following are further comprised:
in response to switching operation triggered by the first user, switching to play other media content historically posted by the target second user.

According to one or more embodiments of this disclosure, after displaying the at least one media content historically posted by the target second user in the information presenting page, the following are further comprised:
in response to a selection operation of the first user for the at least one media content, displaying a predetermined first interaction control in the information presenting page;
in response to a trigger operation of the first user on the first interaction control, performing an interaction operation based on the at least one media content.

According to one or more embodiments of this disclosure, the first interaction control comprises a forwarding control;
in response to the trigger operation of the first user on the first interaction control, performing the interaction operation based on the at least one media content comprises:
in response to a trigger operation of the first user on the forwarding control, displaying a predetermined user list;
in response to a selection operation of the first user in the user list, determining at least one target user selected by the first user;
sending the at least one media content to the at least one target user.

According to one or more embodiments of this disclosure, the first interaction control comprises a like control or a favorite control;
in response to the trigger operation of the first user on the first interaction control, performing the interaction operation based on the at least one media content comprises:
in response to a trigger operation of the first user on the like control or the favorite control, performing a like operation or a favorite operation on the at least one media content.

According to one or more embodiments of this disclosure, after displaying the at least one media content historically posted by the target second user in the information presenting page, the following are further comprised:
displaying, on each media content, a second interaction control matching the media content;
in response to a trigger operation of the first user on a second interaction control matching any of the media content, displaying a predetermined interaction list, the interaction list comprising a plurality of interaction sub-controls;
in response to a trigger operation of the first user on any of the interaction sub-controls, performing, on the media content, an interaction operation matching the interaction sub-control.

According to one or more embodiments of this disclosure, after displaying the at least one media content historically posted by the second user in the information presenting page, the following are further comprised:
displaying, on each media content, a third interaction control matching the media content;
in response to a trigger operation of the first user on the third interaction control, obtaining a comment content inputted by the first user;
performing an updating operation on a historical comment content corresponding to the media content, according to the comment content.

According to one or more embodiments of this disclosure, the trigger operation comprises at least one of: a trigger operation on a predetermined control, a trigger operation on a first target key corresponding to a predetermined target keyboard, and a trigger operation on a second target key corresponding to a predetermined target mouse;
wherein the target keyboard and the target mouse are communicatively connected to a current electronic device.

In a second aspect, an apparatus for displaying a page is provided according to one or more embodiments of this disclosure, comprising:
a display module configured to, in response to a predetermined trigger operation of the first user in a target application, display an information presenting page, the information presenting page comprising identification information of a plurality of second users having a predetermined association with a first user, and the target application comprising an instant messaging application installed in a personal computer;
a processing module configured to, in response to a selection operation of the first user for the identification information of a target second user, display at least one media content historically posted by the target second user in the information presenting page.

According to one or more embodiments of this disclosure, the identification information of the second users is displayed in a first area of the information presenting page, and the processing module is configured to:
displaying the at least one media content historically posted by the target second user in a second area of the information presenting page.

According to one or more embodiments of this disclosure, the display module is configured to:
in response to a trigger operation of the user on a predetermined user list control, display the information presenting page;
or, the display module is configured to:
   obtain a search content inputted by the first user based on a predetermined search control, and determine at least one second user of the second users matching the search content;
   display the information presenting page, the identification information of the at least one second user being presented in the information presenting page.

According to one or more embodiments of this disclosure, the processing module is configured to:
determine a posting time of each media content and label information set by the target second user for the media content;
determine a presenting order of the at least one media content historically posted by the target second user according to the posting time and the label information;
display the at least one media content historically posted by the target second user within the information presenting page according to the presenting order.

According to one or more embodiments of this disclosure, the processing module is configured to:
determine a current date, and displaying a target calendar matching with the current date in the information presenting page;
determine, for each media content, a posting time of the media content, and displaying, in the target calendar, according to the posting time, the media content at a position matching the posting time.

According to one or more embodiments of this disclosure, the information presenting page comprises at least one media content category; and the processing module is configured to:
determine a media content category corresponding to each media content historically posted by the target second user;
display, for each media content, the media content in a display area associated with the media content category in the information presenting page.

According to one or more embodiments of this disclosure, the apparatus further comprises:
a display module, which is configured to, in response to a selection operation of the first user for any media content category, presenting at least one media content corresponding to the media content category in the information presenting page.

According to one or more embodiments of this disclosure, the apparatus further comprises:
a redirecting module, configured to, in response to a trigger operation of the first user on any media content, redirect to a predetermined media content playing page;
a playing module, configured to play the media content in the media content playing page.

According to one or more embodiments of this disclosure, the apparatus further comprises:
a switching module, configured to, in response to switching operation triggered by the first user, switch to play other media content historically posted by the target second user.

According to one or more embodiments of this disclosure, the apparatus further comprises:
a display module, configured to, in response to a selection operation of the first user for the at least one media content, display a predetermined first interaction control in the information presenting page;
an interaction module, configured to, in response to a trigger operation of the first user on the first interaction control, perform an interaction operation based on the at least one media content.

According to one or more embodiments of this disclosure, the first interaction control comprises a forwarding control;
the interaction module is configured to:
in response to a trigger operation of the first user on the forwarding control, display a predetermined user list;
in response to a selection operation of the first user in the user list, determine at least one target user selected by the first user;
send the at least one media content to the at least one target user.

According to one or more embodiments of this disclosure, the first interaction control comprises a like control or a favorite control;
the interaction module is configured to:
in response to a trigger operation of the first user on the like control or the favorite control, performing a like operation or a favorite operation on the at least one media content.

According to one or more embodiments of this disclosure, the apparatus further comprises:
a display module, configured to display, on each media content, a second interaction control matching the media content;
a processing module, configured to, in response to a trigger operation of the first user on a second interaction control matching any of the media content, display a predetermined interaction list, the interaction list comprising a plurality of interaction sub-controls;
an interaction module, configured to, in response to a trigger operation of the first user on any of the interaction sub-controls, perform, on the media content, an interaction operation matching the interaction sub-control.

According to one or more embodiments of this disclosure, the apparatus further comprises:
a display module, configured to display, on each media content, a third interaction control matching the media content;
an obtaining module, configured to, in response to a trigger operation of the first user on the third interaction control, obtain a comment content inputted by the first user;
a updating module, configured to perform an updating operation on a historical comment content corresponding to the media content, according to the comment content.

According to one or more embodiments of this disclosure, the trigger operation comprises at least one of: a trigger operation on a predetermined control, a trigger operation on a first target key corresponding to a predetermined target keyboard, and a trigger operation on a second target key corresponding to a predetermined target mouse;
wherein the target keyboard and the target mouse are communicatively connected to a current electronic device.

In a third aspect, an electronic device is provided according to one or more embodiments of this disclosure, comprising: at least one processor and a memory;
the memory storing computer executable instructions;
the at least one processor executing the computer executable instruction stored in the memory, to cause the processor to be configured with a method of displaying a page according to above first aspect and various possible designs thereof.

In a fourth aspect, a computer-readable storage medium is provided according to one or more embodiments of this disclosure. The computer-readable storage medium stores computer-executable instructions which, when executed by a processor, implement a method of displaying a page according to above first aspect and various possible designs thereof.

In a fifth aspect, a computer program product is provided according to one or more embodiments of this disclosure, comprising a computer program that, when executed by a processor, implements a method of displaying a page according to according to above first aspect and various possible designs thereof.

The foregoing description is merely illustration of the preferred embodiments of the present disclosure and the technical principles used herein. Those skilled in the art should understand that the disclosure scope involved therein is not limited to the technical solutions formed from a particular combination of the above technical features, but should also cover other technical solutions formed by any combination of the above technical features or their equivalent features without departing from the above disclosure concepts, e.g., technical solutions formed by replacing the above features with technical features having similar functions disclosed (without limitation) in the present disclosure.

In addition, although various operations have been depicted in a particular order, it should not be construed as requiring that the operations be performed in the particular order shown or in sequential order of execution. Multitasking and parallel processing may be advantageous in certain environments. Likewise, although the foregoing discussion includes several specific implementation details, they should not be construed as limiting the scope of the present disclosure. Some features described in the context of separate embodiments may also be realized in combination in a single embodiment. On the contrary, various features described in the context of a single embodiment may also be realized in a plurality of embodiments, either individually or in any suitable sub-combinations.

While the present subject matter has been described using language specific to structural features and/or method logic actions, it should be understood that the subject matter defined in the appended claims is not necessarily limited to the particular features or actions described above. On the contrary, the particular features and actions described above are merely example forms of realizing the claims. With respect to the apparatus in the above embodiment, the specific manner in which each module performs an operation has been described in detail in the embodiments relating to the method, and will not be detailed herein.

## Claims

1. A method of displaying a page, comprising:
in response to a predetermined trigger operation in a target application, displaying an information presenting page, the information presenting page comprising identification information of a plurality of second users having a predetermined association with a first user, and the target application comprising an instant messaging application installed in a personal computer;
in response to a selection operation for the identification information of a target second user, displaying at least one media content historically posted by the target second user in the information presenting page.

2. The method of claim 1, wherein the identification information of the second users is displayed in a first area of the information presenting page, and displaying the at least one media content historically posted by the target second user in the information presenting page comprises:
displaying the at least one media content historically posted by the target second user in a second area of the information presenting page.

3. The method of claim 1, wherein in response to the predetermined trigger operation in the target application, displaying the information presenting page comprises:
in response to a trigger operation on a predetermined user list control, displaying the information presenting page; or
in response to the predetermined trigger operation in the target application, displaying the information presenting page comprising:
obtaining a search content inputted based on a predetermined search control, and determining at least one second user matching the search content;
displaying the information presenting page, the identification information of the at least one second user being presented in the information presenting page.

4. The method of claim 1, wherein displaying the at least one media content historically posted by the target second user in the information presenting page comprises:
determining a posting time of each the media content and label information set by the target second user for the media content;
determining a presenting order of the at least one media content historically posted by the target second user according to the posting time and the label information;
displaying the at least one media content historically posted by the target second user within the information presenting page according to the presenting order.

5. The method of claim 1, wherein displaying the at least one media content historically posted by the target second user in the information presenting page comprises:
determining a current date, and displaying a target calendar matching with the current date in the information presenting page;
determining, for each media content, a posting time of the media content, and displaying, in the target calendar, according to the posting time, the media content at a position matching the posting time.

6. The method of claim 1, wherein the information presenting page comprises at least one media content category; and displaying the at least one media content historically posted by the target second user in the information presenting page comprises:
determining a media content category corresponding to each media content historically posted by the target second user; and
displaying, for each media content, the media content in a display area associated with the media content category in the information presenting page.

7. The method of claim 6, further comprising after displaying the media content in the display area associated with the media content category in the information presenting page:
in response to a selection operation for any media content category, presenting at least one media content corresponding to the media content category in the information presenting page.

8. The method of any of claims 1 to 7, further comprising after displaying the at least one media content historically posted by the target second user in the information presenting page:
in response to a trigger operation on any media content, redirecting to a predetermined media content playing page;
playing the media content in the media content playing page.

9. The method of claim 8, further comprising after playing the media content in the media content playing page:
in response to switching operation triggered by the first user, switching to play other media content historically posted by the target second user.

10. The method of any of claims 1 to 7, further comprising after displaying the at least one media content historically posted by the target second user in the information presenting page:
in response to a selection operation for the at least one media content, displaying a predetermined first interaction control in the information presenting page;
in response to a trigger operation on the first interaction control, performing an interaction operation based on the at least one media content.

11. The method of claim 10, wherein the first interaction control comprises a forwarding control;
in response to the trigger operation on the first interaction control, performing the interaction operation based on the at least one media content comprises:
in response to a trigger operation on the forwarding control, displaying a predetermined user list;
in response to a selection operation in the user list, determining at least one selected target user;
sending the at least one media content to the at least one target user.

12. The method of claim 10, wherein the first interaction control comprises a like control or a favorite control;
in response to the trigger operation on the first interaction control, performing the interaction operation based on the at least one media content comprises:
in response to a trigger operation on the like control or the favorite control, performing a like operation or a favorite operation on the at least one media content.

13. The method of any of claims 1 to 7, further comprising after displaying the at least one media content historically posted by the target second user in the information presenting page:
displaying, on each media content, a second interaction control matching the media content;
in response to a trigger operation on a second interaction control matching any of the media content, displaying a predetermined interaction list, the interaction list comprising a plurality of interaction sub-controls;
in response to a trigger operation on any of the interaction sub-controls, performing, on the media content, an interaction operation matching the interaction sub-control.

14. The method of any of claims 1 to 7, further comprising after displaying the at least one media content historically posted by the second user in the information presenting page:
displaying, on each media content, a third interaction control matching the media content;
in response to a trigger operation on the third interaction control, obtaining inputted comment content;
performing an updating operation on a historical comment content corresponding to the media content, according to the comment content.

15. The method of any of claims 1 to 7, wherein the trigger operation comprises at least one of: a trigger operation on a predetermined control, a trigger operation on a first target key corresponding to a predetermined target keyboard, and a trigger operation on a second target key corresponding to a predetermined target mouse;
wherein the target keyboard and the target mouse are communicatively connected to a current electronic device.

16. An apparatus for displaying a page, comprising:
a display module configured to, in response to a predetermined trigger operation in a target application, display an information presenting page, the information presenting page comprising identification information of a plurality of second users having a predetermined association with a first user, and the target application comprising an instant messaging application installed in a personal computer;
a processing module configured to, in response to a selection operation for the identification information of a target second user, display at least one media content historically posted by the target second user in the information presenting page.

17. An electronic device comprising:
a processor and a memory;
the memory storing computer executable instructions;
the processor executing the computer executable instruction stored in the memory, to cause the processor to be configured with a method of displaying a page according to any of claims 1 to 15.

18. A computer-readable storage medium storing computer-executable instructions which, when executed by a processor, implement a method of displaying a page according to any of claims 1 to 15.

19. A computer program product comprising a computer program that, when executed by a processor, is configured with a method of displaying a page according to any of claims 1 to 15.
